Europäisches Patentamt

European Patent Office

Office européen des brevets

(19)

(11) Veröffentlichungsnummer : **0 017 235**
**B1**

# (12) EUROPÄISCHE PATENTSCHRIFT

(45) Veröffentlichungstag der Patentschrift :
30.09.81

(21) Anmeldenummer : 80101796.3

(22) Anmeldetag : 03.04.80

(51) Int. Cl.³ : **C 07 B 23/00, C 07 C 53/19**

---

(54) Verfahren zur omega-123J-Markierung von Fettsäuren.

---

(30) Priorität : 07.04.79 DE 2914069

(43) Veröffentlichungstag der Anmeldung :
15.10.80 (Patentblatt 80/21)

(45) Bekanntmachung des Hinweises auf die Patenterteilung : 30.09.81 Patentblatt 81/39

(84) Benannte Vertragsstaaten :
BE CH DE FR GB LI NL SE

(56) Entgegenhaltungen :
FR - A - 2 209 584

INTERNATIONAL JOURNAL OF APPLIED RADIA-
TION AND ISOTOPES, Band 28, nr. 1-2, Januar-
Februar 1977 OXFORD (GB)
G. STOCKLIN.: « Bromine-77 and Iodine - 123
radiopharmaceuticals », Seiten 131-148.

(73) Patentinhaber : Kernforschungsanlage Jülich Gesellschaft mit beschränkter Haftung
Postfach 1913
D-5170 Jülich (DE)

(72) Erfinder : Stöcklin, Gerhard, Prof. Dr.
Rödingerstrasse 18
D-5177 Titz-Kalrath (DE)
Erfinder : Laufer, Peter
Hauptstrasse 82
D-5162 Niederzier-Steinstrass (DE)
Erfinder : Machulla, Jürgen, Dr.
Alfredstrasse 290
D-4300 Essen 1 (DE)

(74) Vertreter : Garbeck, Hans, Dr.-Ing.
Artilleriestrasse 14
D-5170 Jülich (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

# Verfahren zur omega-¹²³J-Markierung von Fettsäuren

Die Erfindung bezieht sich auf ein Verfahren zur ω-¹²³J-Markierung von Fettsäuren durch Umsetzung von ω-Bromfettsäuren mit ¹²³J-markiertem Jodid.

Fettsäuren, die in ω-Stellung mit ¹²³Jod markiert sind, werden in der Medizin zur Lokalisierung von Herzinfarkten und Ischämien verwendet sowie zur Erfassung des Herzmuskels und Leberstoffwechsels (siehe z.B. CH. Freundlieb u.a. in Proc. XV. Int. An. Meeting of the Society of Nuclear Medicine, Groningen, September 13-16, 1977, sowie K. Vyska u.a. in Proc. XVI. Int. An. Meeting of the Society of Nuclear Medicine, October 24-27, Madrid).

Jod-123 mit einer Halbwertszeit von 13 Std. wird im Zyklotron erzeugt und ist daher relativ teuer und kurzlebig, so daß die Herstellung ¹²³J-markierter Verbindungen möglichst rasch und mit möglichst guter Ausbeute erfolgen sollte.

Es ist bekannt, Radiojod mit ω-Bromfettsäuren in flüssiger Phase (gelöst in Ketonen) umzusetzen und so einen Halogenaustausch herbeizuführen. Die dabei erzielten Ausbeuten liegen unter 60 % bei einer Präparationsdauer von fast 3 Std. (H.-J. Machulla u.a., J. Nucl. Med. Bd. 19, Nr. 3, (1978), 298-302). Diese relativ geringe Ausbeute und die Umsetzungsgeschwindigkeit lassen das Verfahren nicht sonderlich attraktiv erscheinen.

Ferner wird von G. Stöcklin in einem Übersichtsartikel im Int. J. appl. Radiat. Isotopes 28(1977) S. 131 ff erwähnt, daß α-Jodfettsäuren aus α-Bromfettsäuren besonders wirksam durch Halogenaustausch in der Schmelze erhalten werden können. Ein solcher Halogenaustausch in der Schmelze wurde durch Zugabe von α-Bromfettsäure zu eingedampftem aktiven Jodid und Umsetzung der Mischung erreicht, wobei erhebliche Bromfettsäuremengen benötigt wurden, um das eingedampfte Jod zu sammeln und restlos aufzunehmen.

Überträgt man eine solche Verfahrensweise auf die Herstellung von ω-¹²³Jodfettsäuren, so erhält man — bezogen auf die eingesetzte aktive Lösung — in keiner Weise befriedrigende Ergebnisse.

Es wurde nur gefunden, daß die mangelhaften Ausbeuten an ω-¹²³Jodfettsäure zum einen von Verdampfungsverlusten der aktiven Lösung und zum anderen von einer beachtlichen Konkurrenz durch Zersetzungsreaktionen mit der Bildungsreaktion herrühren.

Diese nachteiligen Einflüsse können, wie weiter gefunden wurde, vermieden werden, und zwar durch das erfindungsgemäße Verfahren der eingangs genannten Art, das im wesentlichen dadurch gekennzeichnet ist, daß man in feiner Schicht über einen inerten Träger verteilte, geschmolzene ω-Bromfettsäure mit dem Jodid umsetzt.

Diese Umsetzung in der Schmelze in form einer dünnen, auf einen Träger aufgezogenen Schicht kann an inerten Trägerteilchen wie insbesondere Glasperlen erfolgen. Die Wand des Reaktionsgefäßes kann aber auch als Träger dienen.

Zweckmäßigerweise geht man von einer verdünnten ω-Bromfettsäurelösung in einem flüchtigen Lösungsmittel aus, wie etwa von ca. 5 mg ω-Bromfettsäuregelöst in Aceton Diese Lösung wird über den Träger, wie beispielsweise runde Glasperlen mit glatter Oberfläche von etwa 100 bis 250 μm Korngröße, verteilt, das Lösungsmittel abgedampft und der so behandelte Träger mit ¹²³Jodidlösung zusammengebracht und nach Abdampfen des Lösungsmittels umgesetzt.

Das radioaktive Jod wird dabei insbesondere als Lösung unter Zusatz von Reduktionsmitteln wie Sulfit oder Hydrazin mit der fein verteilten Bromfettsäure zusammengebracht und nach Abdampfen des oder der Lösungsmittel(s) in relativ kurzzeitiger Reaktion umgesetzt, wodurch die Bildungsreaktion gegenüber kokurrierenden Zersetzungsreaktionen begünstigt wird.

Die eingesetzte ω-Bromfettsäuremenge sollte dabei möglichst gering sein, wobei die tatsächlich angewandte Menge insbesondere einerseits der erfolgreichen chromatographischen Abtrennung des markierten Produkts vom Ausgangsmaterial angemessen und andererseits handhabbar sein soll.

Gemäß der Erfindung ist eine schnelle und praktisch trägerfreie Präparation von ¹²³J-Fettsäuren mit hoher Ausbeute möglich.

Die Umsetzung erfolgt vorzugsweise in der Nähe des Schmelzpunktes der ω-Bromfettsäuren für eine Zeitdauer von etwa 2 bis 10 Minuten.

Grundsätzlich können für die Umsetzung beliebige ω-Bromfettsäuren verwendet werden. Besonders interessant sind jedoch die langkettigen ω-Bromfettsäuren und zwar insbesondere die endständig bromierten $C_{16}$- bis $C_{18}$-Fettsäuren, die für biologische Untersuchungen besonders wichtig sind.

Speziell für solche biologischen Untersuchungen ist eine nachfolgende chromatographische Auftrennung der Reaktionsmischung unter Isolierung der gewünschten ¹²³Jodfettsäure in praktisch trägerfreier Form besonders geeignet, in der Art, wie sie bereits in der älteren Anmeldung P 28 10 696.9 der Anmelderin beschrieben wird. Dabei handelt es sich um eine Hochdruckflüssigkeitschromatographie an Silicagel mit einem unpolaren Eluenten mit einer darin gelösten polaren Komponente oder aber an Silikagel mit (über eine Silanierung) angelagerten Alkanen oder Alkylaminen unter Verwendung von polaren, protischen Flüssigkeiten als mobile Phase oder Eluens. Die so erhaltene, gereinigte ω-J-Fettsäure wird für die Applikation vorzugsweise in sogenanntem monomeren Albumin, speziell in Humanserumalbumin mit einem Molekulargewicht um 67 000 gelöst und als Humanserumalbuminlösung injiziert.

Nachfolgend wird die Erfindung anhand von Ausführungsbeispielen beschrieben.

## Beispiel 1

### Herstellung von ω-$^{123}$Jodheptadecansäure

In einen 25 ml Rundkolben mit Schliff (NS10) und Septumansatz wurden etwa 7 g runde Glasperlen mit glatter Oberfläche und etwa 180 bis 250 μm (60 bis 80 mesh) Korngröße mit einer Kapazität von 0,5 % eingebracht. Über die Glasperlen wurde eine Lösung von 10 mg ω-Bromheptadecansäure in 3 ml Aceton gegeben und das Lösungsmittel langsam im Vakuum abgedampft.

In den Rundkolben mit den so vorbehandelten Glasperlen wurde dann das praktisch trägerfreie $^{123}$Jod (ca. 50 mCi) in Form von NaJ in 1 ml (ggf. NaOH-alkalischem) Wasser und 2 ml Aceton gegeben und anschließend im Vakuum das Lösungsmittel abgedampft. Gegen Ende des Abdampfens wurde noch mit einem Föhn erwärmt, um Feuchtigkeitsspuren zu entfernen. Der geschlossene Kolben wurde danach mittels eines 80 °C warmen Ölbades zum Schmelzen der Fettsäure 10 Minuten lang erwärmt. Anschließend wurde der Inhalt dreimal mit je 3 ml Eluens (z.B. n-Heptan + 2,5 % Eisessig) extrahiert und die Lösung zur Trennung des Produktes von dem Ausgangsmaterial in einen Hochdruckflüssigkeitschromatographen injiziert.

Als Trennsäule diente eine 30 cm lange Säule von 1 cm Innendurchmesser, die mit Kieselgel von ca. 10 μm Korngröße gefüllt war. Eluiert wurde mit n-Heptan mit 2,5 % Eisessig mit einer Durchflußgeschwindigkeit von 5 ml/min, wobei die ω-$^{123}$Jodheptadecansäure nach 30 Minuten in gereinigter Form erhalten wurde.

## Beispiel 2

Eine Lösung von 10 mg 17-Brom-heptadecansäure in 2 ml Aceton wurde in einem 25 ml Kolben zur Trockene eingeengt. Dazu wurde 1 ml wässrige $^{123}$J-Jodid-Lösung, die 10 μl 25 % ige Hydrazinlösung enthielt, hinzugefügt und erneut zur Trockene eingeengt. Der trockene Rückstand wurde 5 min auf 150 °C erhitzt. Danach wurde der Rückstand in 2 ml Eluens (siehe oben) aufgenommen und an einer HPLC-Säule chromatographiert.

Zeitbedarf : 45 min.
Ausbeute : 75 %.

## Beispiel 3

In gleicher Weise wie in Beispiel 1 wurde ω-Bromhexadecansäure mit $^{123}$Jodid umgesetzt. Nach Aufarbeitung der Reaktionsmischung wie vorstehend wurde die ω-$^{123}$Jodhexadecansäure in gereinigter Form in gleicher Ausbeute erhalten.

## Ansprüche

1. Verfahren zur ω-$^{123}$J-Markierung von Fettsäuren durch Umsetzung von ω-Bromfettsäuren mit $^{123}$J-markiertem Jodid, dadurch gekennzeichnet, daß man in feiner Schicht über einen inerten Träger verteilte geschmolzene ω-Bromfettsäure mit dem Jodid umsetzt.

2. Verfahren nach Anspruch 1, dadurch gekennzeichnet, daß man die Umsetzung für eine Zeitdauer von etwa 2 bis 10 Minuten durchführt.

3. Verfahren nach Anspruch 1 oder 2, dadurch gekennzeichnet, daß als ω-Bromfettsäure eine langkettige ω-Bromfettsäure, insbesondere eine endständig bromierte gesättigte oder ungesättigte $C_{16}$- bis $C_{18}$-Fettsäure verwendet wird.

4. Verfahren nach einem der vorangehenden Ansprüche, dadurch gekennzeichnet, daß man das Reaktionsprodukt vom festen Trägermaterial insbesondere mit einem direkt für die Chromatographie geeigneten Lösungsmittel (gemisch) ablöst und chromatographiert.

5. Verfahren nach Anspruch 4, dadurch gekennzeichnet, daß man das Reaktionsprodukt einer Hochdruckflüssigkeitschromatographie insbesondere an Silicagel mit einem unpolaren Eluenten mit einer darin gelösten polaren Komponente oder an Silicagel mit gebundenem Alkan oder Alkylamin mit einem polaren, protischen Eluenten unterwirft.

## Claims

1. Process for the ω-$^{123}$I-labelling of fatty acids by reacting ω-bromo-fatty acids with an iodide labelled with $^{123}$I, characterised in that a molten ω-bromo-fatty acid which is distributed in a fine layer over an inert carrier is reacted with the iodide.

2. Process according to Claim 1, characterised in that the reaction is carried out for a period of about 2 to 10 minutes.

3. Process according to Claim 1 or 2, characterised in that the ω-bromo-fatty acid used is a long-chain ω-bromo-fatty acid, in particular a saturated or unsaturated $C_{16}$- to $C_{18}$-fatty acid which is brominated in the terminal position.

4. Process according to one of the preceding Claims, characterised in that the reaction product is dissolved off the solid carrier material, in particular by means of a solvent (mixture) directly suitable for chromatography, and is subjected to chromatography.

5. Process according to Claim 4, characterised in that the reaction product is subjected to highpressure liquid chromatography, in particular over silica gel, using a non-polar eluent having a polar component dissolved therein, or over silica gel with a bonded alkane or alkylamine, using a polar, protic eluent.

## Revendications

1. Procédé de marquage d'acides gras en position ω par $^{123}$I par réaction d'acides gras bromés en position ω avec de l'iodure marqué par $^{123}$I,

caractérisé en ce qu'on fait réagir, avec l'iodure, un acide gras bromé en position ω, fondu et réparti en une fine couche sur un support inerte.

2. Procédé suivant la revendication 1, caractérisé en ce qu'on effectue la réaction au cours d'une période d'environ 2 à 10 minutes.

3. Procédé suivant la revendication 1 ou 2, caractérisé en ce que, comme acide gras bromé en position ω, on utilise un acide gras à longue chaîne bromé en position ω, en particulier, un acide gras saturé ou insaturé, à terminaison bromée et contenant 16 à 18 atomes de carbone.

4. Procédé suivant une des revendications précédentes, caractérisé en ce qu'on sépare le produit réactionnel de la matière support solide, avec un solvant (ou un mélange de solvants), en particulier, avec un solvant (ou un mélange de solvants) directement approprié pour la chromatographie, puis on le soumet à une chromatographie.

5. Procédé suivant la revendication 4, caractérisé en ce qu'on soumet le produit réactionnel à une chromatographie liquide sous haute pression, en particulier, sur du gel de silice, avec un éluant non polaire dans lequel est dissous un composant polaire, ou sur du gel de silice ayant une alkylamine ou un alcane fixé(e) avec un éluant polaire protique.